# EUROPÄISCHE PATENTSCHRIFT

(11) **EP 1 095 688 B1**
(45) Veröffentlichungstag und Bekanntmachung des Hinweises auf die Patenterteilung: **30.03.2005**
(21) Anmeldenummer: 99120244.1
(22) Anmeldetag: 11.10.1999
(51) Int. Cl.: B01D 46/04

(54) **Staubfilter**
Dust filter
Filtre à poussière

(43) Veröffentlichungstag der Anmeldung: 02.05.2001
(73) Patentinhaber: Intensiv-Filter GmbH & Co KG, D-42555 Velbert - Langenberg (DE)
(72) Erfinder: Kordas, Friedel, 45663 Recklinghausen (DE)
(74) Vertreter: Christophersen & Partner

(56) Entgegenhaltungen:
- DE-A- 2 529 044
- DE-A- 2 943 093
- DE-A- 4 443 632
- FR-A- 2 709 978

## Beschreibung

Die Erfindung betrifft ein Staubfilter mit einem vertikal ausgerichteten Filtergehäuse, einem das Filtergehäuse in einen unten liegenden Staubluftraum und einen oben liegenden Reinluftraum unterteilenden Trennboden, der mit einer Vielzahl von Öffnungen versehen ist, in die nach oben zu dem Reinluftraum hin offene, eigenstabile Filterrohre eingehängt sind, wobei jeweils mehrere Filterrohre zu einem Füterbündel zusammengefaßt sind und wobei der Abstand zwischen den einzelnen Filterrohren eines jeden Filterbündels geringer ist als der Abstand einzelner Filterbündel zueinander, sowie mit Mitteln, die vorgesehen sind, um die Filterrohre von an deren Außenflächen haften Staub- und Produktpartikeln zu reinigen.

Ein solches Staubfilter ist aus der DE 44 40 279 A1 bekannt. Bei Staubfiltern dieser Bauform werden zur Staubabscheidung Filterelemente in Form von Filterschläuchen oder Filterrohre benutzt, die einen Durchmesser von etwa 150 mm und eine Länge von 4 m und Länger aufweisen. Neben den unter Eigengewicht in den Trennboden eingehängten Filterschläuchen ist es bekannt, eigenstabile Filterrohre zur Ausbildung der Filterelemente zu verwenden. In beiden Fällen wird als Material für die Filterelemente ein Nadelfilz verwendet. Die Filterelemente sind in einem Staubluftraum angeordnet und werden von außen nach innen von Staubluft durchströmt. Ihr Innenraum steht mit einem Reinluftraum in Verbindung, der gegenüber dem Staubluftraum mit einem geringeren Druck betrieben wird und von dem aus das gereinigte Gas die Filteranlage verläßt. Die sich an den Außenwänden der Filterelemente ansammelnden Staub- und Produktpartikel bilden einen Staubkuchen, dessen Dicke im Laufe des Betriebs zunimmt. Aus diesem Grund sind bei den bekannten Staubluftfiltem Reinigungsmittel vorgesehen, um die Außenflächen der Filterelemente von den daran anhaftenden Staub- und Produktpartikeln zu reinigen.

So ist es beispielsweise aus der DE 44 40 279 A1 bekannt, die Filterelemente mittels eines Druckluft-Impuls-Injektorstroms so zu reinigen, daß die an der Schlauchaußenseite anhaftenden Staub- oder Produktpartikel durch Rückspülen mit Druckluft abgeblasen werden.

Werden die Staubfilter jedoch an Produktionsanlagen eingesetzt, die mit wechselnden Produkten betrieben werden, so ist es erforderlich, den gesamten Staubluftraum der Filter einschließlich der Filterschläuche bzw. Filterrohre so von den beim Filterprozeß unvermeidlich an Filterschläuchen und Innenwänden des Filtergehäuses anhaftenden Staub- oder Produktrückständen zu reinigen, dass bei einem Produktwechsel Produktverfälschungen oder Produktverunreinigungen vermieden werden. Ein solcher hygienegerechter Betrieb ist vor allem bei der Verarbeitung von Lebensmitteln, pharmazeutischen oder medizinischen Produkten unumgänglich.

Zur Reinigung von Staubfiltern ist es weiterhin bekannt, die Außenflächen der Filterschläuche bzw. Filterrohre sowie die Innenseite des Filtergehäuses mit einer Waschflüssigkeit zu reinigen, die über im Staubluftraum angeordnete Waschdüsen ausgegeben wird.

Auch ist es bekannt, durch das Zusammenfassen mehrerer Filterrohre mit jeweils einem Durchmesser von weniger als 100 mm, vorzugsweise 40 bis 50 mm, zu einem Filterbündel die Baulänge der Filterrohre auf unter 4 m, vorzugsweise 2 m, zu reduzieren. Auf diese Weise ist es möglich, daß mit den kurzen Filterbündeln ein vergleichbarer Luftdurchsatz erreicht werden kann, wie bei den vorstehend beschriebenen sehr langen Filterschläuchen.

Diese aus dem Stand der Technik bekannten Staubluftfilter weisen den Nachteil auf, daß sie nur mit einem sehr großen Aufwand hygienegerecht zu reinigen sind und die verwendeten Filtermaterialien zur Gewährleistung einer ausreichenden mechanischen Festigkeit eine Dicke von ca. 1,5 - 2 mm aufweisen. Dieses relativ dicke poröse Material saugt sich beim Waschprozeß mit der Waschflüssigkeit voll und muß vor dem erneuten Einsatz des Staubfilters erst in einem langwierigen Trocknungsprozeß ausgetrocknet werden.

Davon ausgehend liegt der Erfindung die **Aufgabe** zugrunde, ein einen geringen Platzbedarf erforderndes Staubfilter der eingangs genannten Art derart weiterzuentwickeln, daß dieses ein einfaches und schnelles Reinigen der Filterelemente ermöglicht.

Die **Lösung** dieser Aufgabenstellung ist erfindungsgemäß dadurch gekennzeichnet, daß als Reinigungsmittel im Reintuftraum oberhalb jedes Filterbündels eine Druckluftquelle eines Druckluft-Impuls-Injektors angeordnet ist, um mittels Drudduftstößen die an den Außenflächen der Filterrohre anhaftenden Staub- und Produktparfkel zu entfemen, wobei jedes Filterbündel auf der Oberseite des Trennbodens von einer die Filterrohre des jeweiligen Filterbündels einhüllenden Fangdüse umgeben ist, die die Druckluft des Injektorstroms auf die einzelnen Filterrohre des Filterbündels konzentriert.

Durch die als Reinigungsmittel im Reinluftraum oberhalb jedes Filterbündels angeordneten Druckluftquellen eines Druckluft-Impuls-Injektorstroms werden die an den Außenflächen der Filterrohre anhaftenden Staub- und Produktpartikel entfernt. Da die Filterrohre zu Filterbündeln zusammengefaßt sind, ist es dabei ausreichend, pro Filterbündel nur eine Druckluftquelle vorzusehen. Durch die Konzentration der Druckluft des Injektorstroms auf die einzelnen Filterrohre durch eine die Filterrohre des jeweiligen Filterbündels einhüllenden Fangdüse, werden die von der Druckluftquelle aufgebrachten Druckluftstöße zuielgerichtet in die einzelnen Filterrohre eines jeden Filterbündels gelenkt, wodurch die Rückspülwirkung der Druckluftstöße verstärkt und so die Reinigung der Filterelemente vereinfacht und beschleunigt wird.

Mit einer vorteilhaften Ausgestaltung wird vorgeschlagen, daß der Innendurchmesser der Fangdüse etwas größer ist als der Durchmesser der die Filterrohre eines Fifterbündels umgebende Hüllkreis.

Der Luftdurchsatz beim Rückspülen der Filterrohre mittels des Druckluft-Impuls-Injektorsystems kann weiterhin dadurch verstärkt werden, daß die Druckluftreinigung der Filterrohre zusätzlich über mindestens in einem Bereich des Injektorsystems angesaugte Sekundärluft erfolgt. Diese Sekundärluft wird durch die von der Druckluftquelle ausgegebenen Druckluftstöße angesaugt und mitgerissen, so daß sich der Gesamtluftdurchsatz zum Rückspülen der Filterrohre aus der Druckluft der Druckluftquelle sowie der zusätzlich angesaugten Sekundärluft zusammensetzt.

Insbesondere bei der Verwendung erfindungsgemäßer Staubfilter bei der Verarbeitung von Lebensmitteln und/oder medizinischen und pharmazeutischen Produkten ist es unumgänglich, daß auch im Staubluftraum eine vollständige Reinigung und Entfernung der abgetrennten Staub- und Produktpartikel erfolgt. Zu diesem Zweck sind als Reinigungsmittel zum Reinigen der Filterrohre im Staubluftraum Waschdüsen zur gerichteten Abgabe von Waschflüssigkeit vorgesehen, wobei die Waschdüsen an den Kreuzungspunkten von den Mittelpunkten benachbarter Filterbündel ausgehender Diagonalen angeordnet sind.

Durch diese Anordnung der Waschdüsen, die vorzugsweise bündig mit der Unterseite des Trennbodens abschließen und aus denen die Waschflüssigkeit im wesentlichen radial austritt, wird gemäß einer bevorzugten Ausführungsform der Erfindung sichergestellt, daß die Waschflüssigkeit die einzelnen Gassen zwischen den Filterbündeln sowie zwischen den Filterrohre eines Filterbündels durchströmt sowie auf die Außenflächen der Filterrohre trifft. Durch diese erfindungsgemäße Anordnung der Waschdüsen wird somit eine vollständige Reinigung der Außenflächen der Filterrohre eines jeden Filterbündels sichergestellt.

Zur vollständigen Reinigung des Staubluftraumes wird weiterhin vorgeschlagen, daß die Waschdüsen so angeordnet sind, daß die aus den Waschdüsen austretende Waschflüssigkeit die Innenseite des Filtergehäuses reinigt.

Zur Zufuhr der Staubluft in das Filtergehäuse ist gemäß einer praktischen Ausführungsform der Erfindung das Filtergehäuse im unteren Bereich der Filterrohre auf der Außenseite von einem Ringkanal umgeben, in den ein Staubluftzufuhrkanal tangential einmündet. Durch diese indirekte Einleitung der Staubluft in das Filtergehäuse über den das Filtergehäuse umgebenden Ringkanal werden mechanische Beschädigungen des Materials der Filterrohre vermieden, wie dies bei dem direkten Einleiten der Staubluft in das Zylindergehäuse aus dem Stand der Technik bekannt ist. Weiterhin hat diese indirekte Einleitung der Staubluft den Vorteil, daß die Geschwindigkeit der einzuleitenden Staubluft nicht durch geeignete Baumaßnahmen reduziert werden muß, da die Gefahr von Beschädigungen der Filterelemente nicht besteht.

Zur Erzielung einer vollständigen Reinigung des gesamten Filtergehäuses wird weiterhin vorgeschlagen, daß auch im Bereich des Staublufteintritts aus dem Staubluftzufuhrkanal in den Ringkanal und/oder im Ringkanal mindestens eine Waschdüse zur gerichteten Abgabe von Waschflüssigkeit vorgesehen ist. Nur durch diese zusätzliche Anordnung von Waschdüsen im Bereich der Staubluftzufuhr kann sichergestellt werden, daß bei einem Produktwechsel das Filtergehäuse zuvor vollständig von Staub- oder Produktresten des vorhergehenden Produktes befreit wird.

Gemäß einer praktischen Ausführungsform der Erfindung erfolgt die Abgabe der Waschflüssigkeit über die Waschdüsen über ein in mehrere Flüssigkeitskreise aufgeteiltes Waschsystem. Durch diese Aufteilung der Waschflüssigkeit in verschiedene Flüssigkeitskreise kann die Waschflüssigkeit gezielt einzelnen Waschdüsen in verschiedenen Abschnitten des Filtergehäuses zugeführt werden. Die Regelung der Flüssigkeitskreise und des Waschsystems erfolgt dabei vorteilhafterweise über ein Waschprogrammsteuerung.

Schließlich wird mit der Erfindung vorgeschlagen, daß jeweils sieben Filterrohre ein Filterbündel bilden.

Weitere Merkmale und Vorteile der Erfindung ergeben sich aus der nachfolgenden Beschreibung der zugehörigen Zeichnung, in der ein Ausführungsbeispiel eines erfindungsgemäßen Staubfilters dargestellt ist. In der Zeichnung zeigt:
- Fig. 1: einen Längsschnitt durch ein erfindungsgemäßes Staubfilter;
- Fig. 2: einen Querschnitt durch das Filtergehäuse entlang der Schnittlinie II-II gemäß Fig. 1 geschnitten;
- Fig. 3: eine separate perspektivische Ansicht eines einzelnen Filterbündels mit zugehörigem Druckluft-Impuls-Injektorsystem;
- Fig. 4: einen Längsschnitt durch das Staubfilter gemäß Fig. 1 mit Darstellung der Waschdüsen und der Waschwasserströmung;
- Fig. 5: eine vergrößerte ausschnittweise Darstellung des Staubfilters gemäß Fig. 4 im Bereich des Trennbodens und
- Fig. 6: eine Ansicht des Trennbodens von unten mit den darin angeordneten Filterbündeln und Waschdüsen.

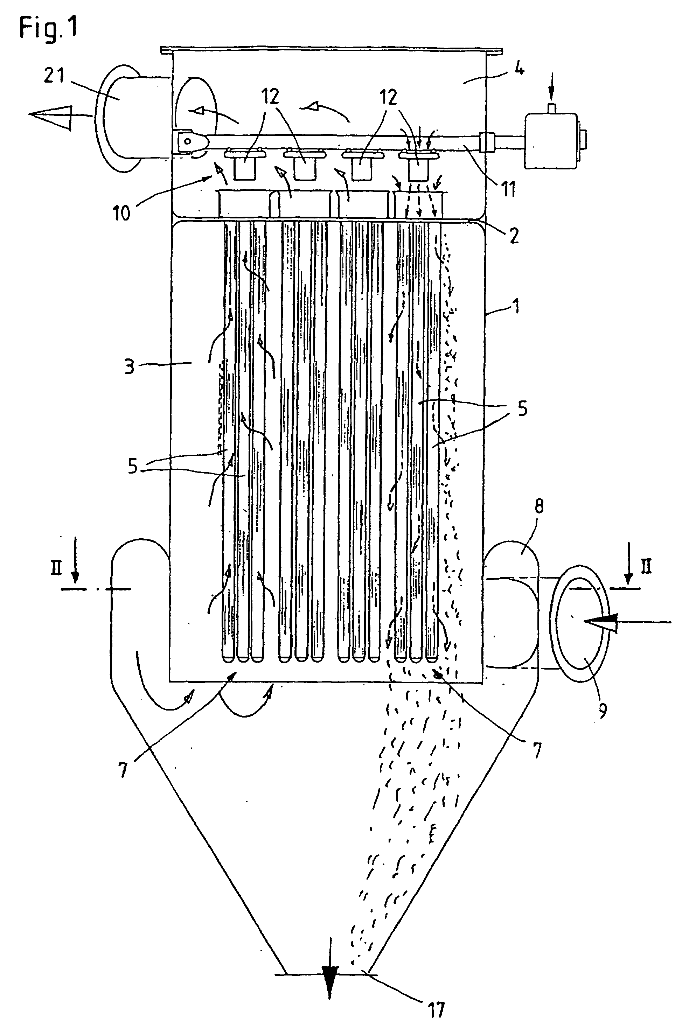

Das in Fig. 1 in Gesamtansicht dargestellte Staubfilter besteht aus einem vertikal ausgerichteten, zylindrischen Filtergehäuse 1, welches durch einen horizontal liegenden Trennboden 2 in einen unten liegenden Staubluftraum 3 und einen oben liegenden Reinluftraum 4 unterteilt ist.

Der Trennboden 2 ist ähnlich einem Rohrboden gestaltet und verfügt über ein Vielzahl von Öffnungen mit darin eingesetzten, langgestreckten Filterelementen. Bei den dargestellten Filterelementen handelt es sich um Filterrohre 5. Die an ihrem oberen offenen Ende mit einem ringförmigen Flansch 6 versehenen eigenstabilen Filterrohre 5 sind so in die Öffnungen des Trennbodens 2 eingehängt, daß sie sich mittels des Flansches 6 auf der Oberseite des Trennbodens 2 abstützen. Die wirksame Filterfläche wird durch die Mantelfläche der beim Ausführungsbeispiel zylindrischen Filterrohre 5 gebildet.

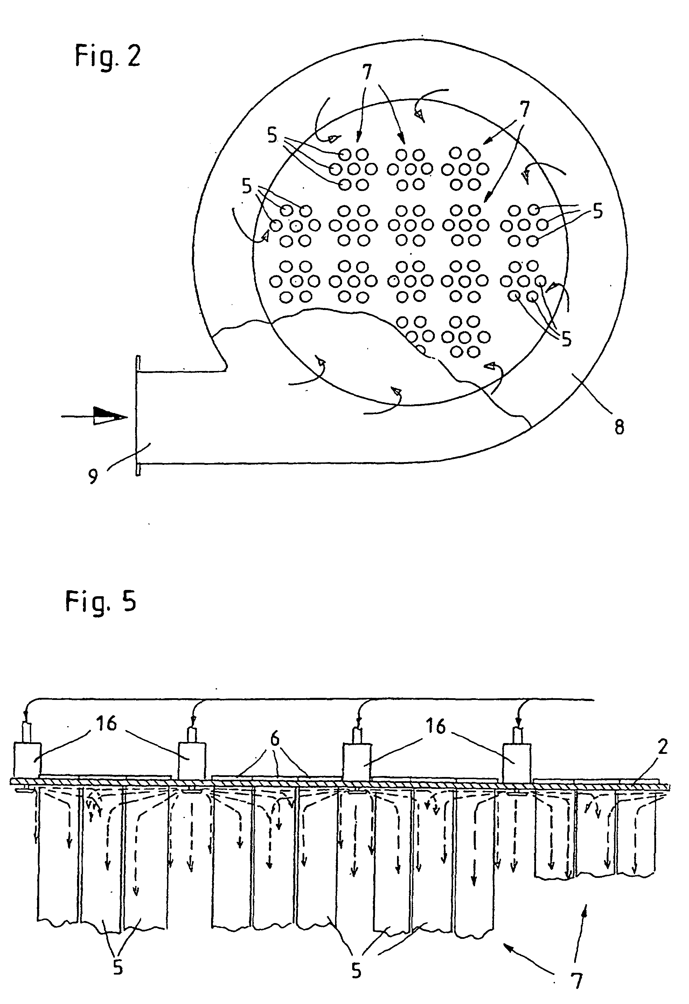

Wie insbesondere aus Fig. 2 ersichtlich, sind jeweils mehrere Filterrohre 5 so zueinander angeordnet, daß sie zusammen ein Filterbündel 7 bilden. Im dargestellten Ausführungsbeispiel bilden jeweils sieben Filterrohre 5 ein Filterbündel 7, wobei der Abstand zwischen den einzelnen Filterrohren 5 eines jeden Filterbündels 7 geringer ist als der Abstand der einzelnen Filterbündel 7 zueinander.

Im Bereich des unteren Endes der Filterrohre 5 bzw. Filterbündel 7 ist auf der Außenseite des Filtergehäuses 1 ein Ringkanal 8 angeordnet, in den zur Zufuhr der Staubluft tangential einen Staubluftzufuhrkanal 9 einmündet. Die tangentiale Einmündung des Staubluftzufuhrkanals 9 in den Ringkanal 8 zeigt insbesondere die Schnittdarstellung gemäß Fig. 2.

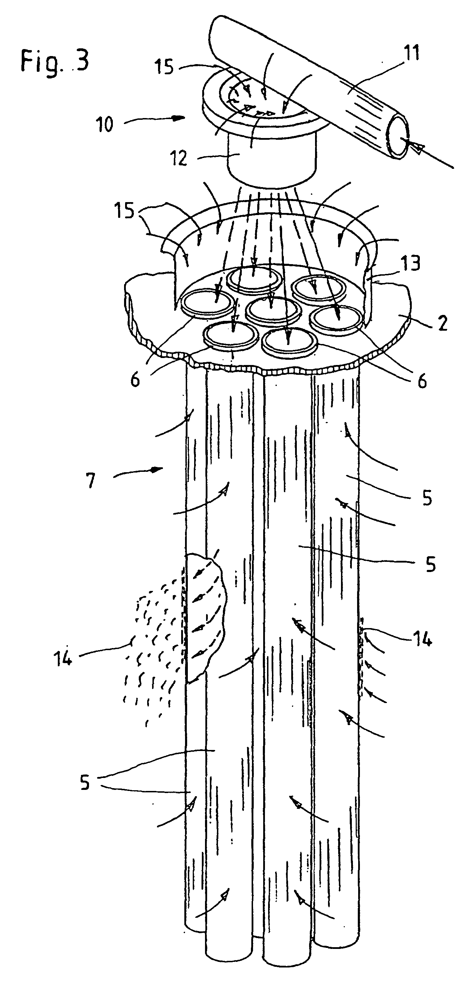

Zum Reinigen der einzelnen Filterrohre 5 der Filterbündel 7 mittels Druckluft ist im Reinluftraum 4 oberhalb jedes Filterbündels 7 eine Druckluftquelle 10 eines Druckluft-Impuls-Injektorsystems angeordnet, die für die Abreinigung der Filterrohre 5 von dem ausfiltrierten Staub oder Produkt während des Filtrierprozesses erforderlich ist. Eine solche Anordnung ist in Fig. 3 dargestellt. Die über eine Druckluftleitung 11 einem Injektor 12 zugeführte Druckluft strömt aus dem Injektor 12 gerichtet in die nach oben offenen Filterrohre 5 des Filterbündels 7. Um die aus dem Injektor 12 austretende Druckluft auf die Filterrohre 5 des jeweiligen Filterbündels 7 zu konzentrieren, ist jedes Filterbündel 7 auf der Oberseite des Trennbodens 2 von einer die gesamten Filterrohre 5 des jeweiligen Filterbündels 7 umgebenden Fangdüse 13 umgeben. Wie aus der Abbildung ersichtlich, ist der Innendurchmesser der Fangdüse 13 dabei etwas größer als der Durchmesser des die Filterrohre 5 des Filterbündels 7 umgebenden Hüllkreises.

Durch die über den Injektor 12 in die Filterrohre 5 eingeleiteten Druckluftstöße wird an der Außenfläche der Filterrohre 5 anhaftender Staubkuchen 14 regelrecht von der Außenfläche der Filterrohre 5 abgesprengt, wie dies auf der linken Seite der Abbildung Fig. 3 dargestellt ist.

Wie weiterhin aus Fig. 3 ersichtlich ist, wird der Luftdurchsatz zum Rückspülen und Reinigen der Filterrohre 5 dadurch erhöht, daß beim Einleiten der Druckluft über den Injektor 12 in die Filterrohre 5 Sekundärluft 15 von der Druckluft angesaugt und mitgerissen wird. Im dargestellten Ausführungsbeispiel wird Sekundärluft 15 an zwei Stellen angesaugt, nämlich einmal im Bereich der Einleitung der Druckluft aus der Druckluftleitung 11 in den Injektor 12 und andererseits im Einströmbereich der aus dem Injektor 12 in die Fangdüse 13 eintretenden Druckluft.

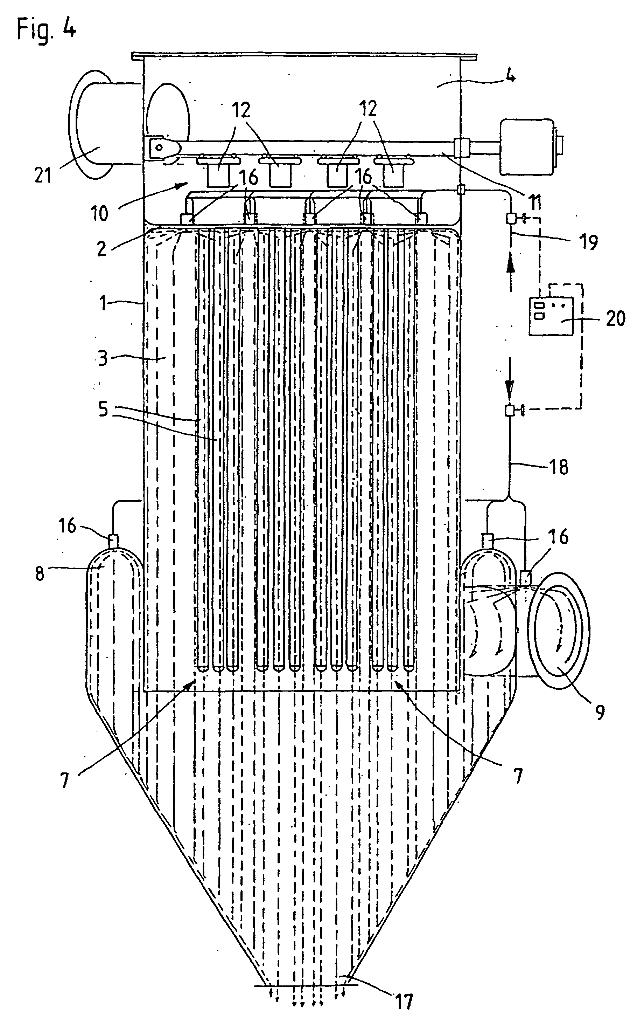

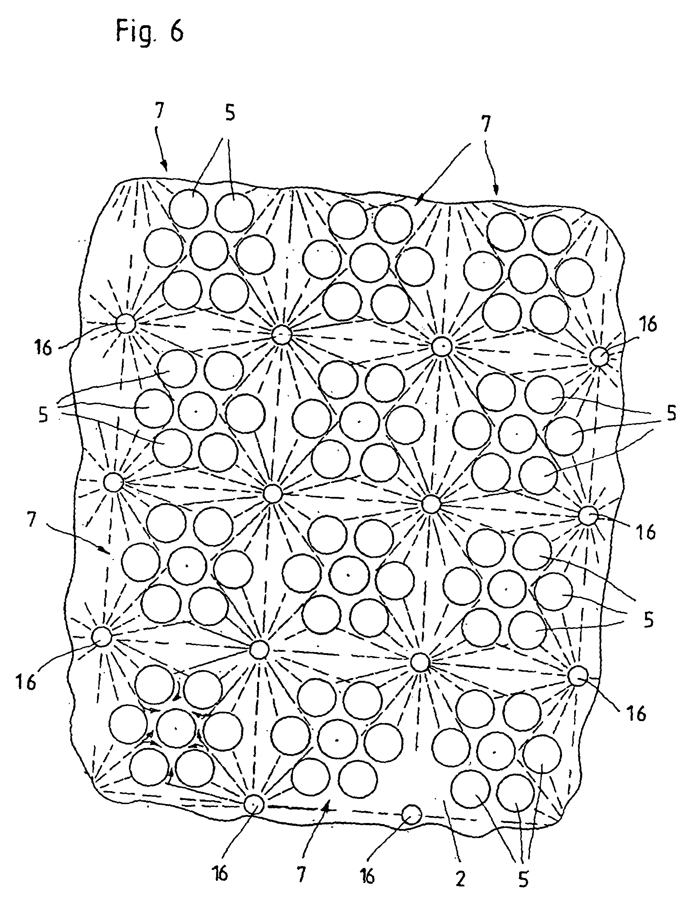

Neben den Öffnungen für die Filterrohre 5 verfügt der Trennboden 2 noch über weitere Öffnungen, in die Waschdüsen 16 eingesetzt sind, wie dies insbesondere den Abbildungen Fig. 4 und 5 zu entnehmen ist. Wie aus Fig. 6 ersichtlich, sind die Waschdüsen 16 im Trennboden 2 an den Kreuzungspunkten der von den Mittelpunkten benachbarter Filterbündel 7 ausgehender Diagonalen angeordnet. Die Waschdüsen 16 sind so im Trennboden 2 angeordnet, daß die Austrittsöffnungen der Waschdüsen 16 bündig mit der Unterseite des Trennbodens 2 abschließen. Die im wesentlichen radial austretende Waschflüssigkeit verläßt die Waschdüsen 16 derart gerichtet, daß die Waschflüssigkeit die einzelnen Gassen zwischen den Filterbündeln 7 sowie zwischen den Filterrohren 5 eines Filterbündels 7 durchströmt sowie auf die Außenfläche der Filterrohre 5 trifft. Durch die an der Außenseite der Filterrohre 5 herabfließende Waschflüssigkeit wird der an der Außenseite der Filterrohre 5 anhaftende Staubkuchen 14 abgewaschen und zusammen mit dem Waschwasser über einen Waschwasseraustritt 17 aus dem Filtergehäuse 2 abgeleitet. Neben der Reinigung der Außenseiten der Filterrohre 5 erfolgt über die aus den Waschdüsen 16 austretende Waschflüssigkeit auch die Reinigung der Innenseite des Filtergehäuses 1. Der Verlauf der Waschflüssigkeitsströmung ist in Fig. 4 beispielhaft dargestellt.

Um eine vollständige Reinigung des kompletten Filtergehäuses 1 erreichen zu können, sind bei dem dargestellten Ausführungsbeispiel neben der Anordnung von Waschdüsen 16 im Trennboden 2 auch Waschdüsen 16 im Bereich der Staubluftzufuhr, nämlich im Staubluftzufuhrkanal 9 sowie im Ringkanal 8 angeordnet. Die Waschflüssigkeit einerseits für die im Trennboden 2 angeordneten Waschdüsen 16 und andererseits für die im Ringkanal 8 und Staubluftzufuhrkanal 9 angeordneten Waschdüsen 16 wird über getrennte Flüssigkeitskreise 18, 19 bereitgestellt, wobei die Steuerung der beiden Flüssigkeitskreise des Waschsystems über eine Waschprogrammsteuerung 20 erfolgt.

Ein solchermaßen ausgebildetes Staubluftfilter wird wie folgt betrieben und gereinigt:

Dem in einen Reinluftraum 4 und einen Staubluftraum 3 aufgeteilten Filtergehäuse 1 wird die Staubluft über den Staubluftzufuhrkanal 9 zugeführt, der tangential in den Ringkanal 8 einmündet, der im unteren Bereich der Filterrohre 5 bzw. Filterbündel 7 auf der Außenseite des Filtergehäuses 1 angeordnet ist. Durch den im Vergleich zum Staubluftraum 3 geringeren Druck im Reinluftraum 4 durchströmt die in den Staubluftraum 3 eingespülte Staubluft die Filterrohre 5 der Filterbündel 7 von außen nach innen. Das solchermaßen gereinigte Gas tritt in den Reinluftraum 4 ein und verläßt das Filtergehäuse 1 über einen Gasaustritt 21.

Während des Filterprozesses setzen sich die abzutrennenden Staub- und Produktpartikel einen Staubkuchen 14 bildend auf der Außenfläche der Filterrohre 5 ab. Da beim laufenden Betrieb die Dicke des Filterkuchens weiter anwächst und somit der Luftdurchsatz durch die aus einem porösen Nadelfilz bestehenden Filterrohre deutlich eingeschränkt wird, ist es von Zeit zu Zeit notwendig, den an den Außenseiten der Filterrohre 5 anhaftenden Staubkuchen 14 zu entfernen.

Das Entfernen des Filterkuchens 14 erfolgt dabei einerseits durch Rückspülen der Filterrohre 5 mittels Druckluft über die oberhalb eines jeden Filterbündels 7 angeordnete Druckluftquelle 10. Wie bereits voranstehend beschrieben und in Fig. 3 dargestellt, wird durch die über den Injektor 12 aufgebrachten Druckluftstöße der Staubkuchen 14 regelrecht von der Außenfläche der Filterrohre 5 abgesprengt.

Um beispielsweise bei einem Produktwechsel eine vollständige Reinigung des Filtergehäuses zu ermöglichen, um Produktverunreinigungen zu vermeiden, wie dies insbesondere bei der Verarbeitung von Lebensmitteln und/oder pharmazeutischen und medizinischen Produkten notwendig ist, sind zusätzlich im Staubluftraum 3 des Filtergehäuses 1 Waschdüsen 16 angeordnet, über die Waschflüssigkeit gerichtet ausgetragen werden kann. Mittels dieser Waschflüssigkeit werden die Außenflächen der Filterrohre 5 sowie die Innenseite des Filtergehäuses 1 von Staub- und Produktpartikeln gereinigt.

Durch die Verwendung eines eigenstabilen und sehr gut luftdurchlässigen Materials zur Ausbildung der Filterrohre 5, welches die Ausbildung eigenstabiler Filterrohre 5 mit einer Wandstärke von unter 1 mm, vorzugsweise 0,6 mm, ermöglicht, saugt das Material der Filterrohre 5 während des Waschprozesses nur wenig Waschflüssigkeit auf, so daß ein solchermaßen ausgebildetes Staubfilter schon nach kurzer Zeit nach dem Spülvorgang wieder soweit abgetrocknet ist, daß ein erneuter Filtervorgang beginnen kann.

Durch die Zusammenfassung mehrerer Filterrohre 5 zu einem Filterbündel 7, wobei die Durchmesser der einzelnen Filterrohre 5 vorzugsweise nur 40 bis 50 mm betragen, ist es möglich, bei gleichbleibendem Luftdurchsatz die Länge der Filterrohre gegenüber den aus dem Stand der Technik bekannten Filterrohren oder Filterschläuchen deutlich zu verringern. In der Regel genügt es Filterrohre mit einer Länge von etwa zwei Metern auszubilden, wohingegen aus dem Stand der Technik übliche Längen für Filterrohre vier Meter und mehr betragen.

### Bezugszeichenliste

- 1: Filtergehäuse
- 2: Trennboden
- 3: Staubluftraum
- 4: Reinluftraum
- 5: Filterrohr
- 6: Flansch
- 7: Filterbündel
- 8: Ringkanal
- 9: Staubluftzufuhrkanal
- 10: Druckluftquelle
- 11: Druckluftleitung
- 12: Injektor
- 13: Fangdüse
- 14: Staubkuchen
- 15: Sekundärluft
- 16: Waschdüse
- 17: Waschwasseraustritt
- 18: Flüssigkeitskreis
- 19: Flüssigkeitskreis
- 20: Waschprogrammsteuerung
- 21: Gasaustritt

## Patentansprüche

1. Staubfilter mit einem vertikal ausgerichteten Filtergehäuse (1), einem das Filtergehäuse (1) in einen unten liegenden Staubluftraum (3) und einen oben liegenden Reinluftraum (4) unterteilenden Trennboden (2), der mit einer Vielzahl von Öffnungen versehen ist, in die nach oben zu dem Reinluftraum (4) hin offene, eigenstabile Filterrohre (5) eingehängt sind, wobei jeweils mehrere Filterrohre (5) zu einem Filterbündel (7) zusammengefaßt sind und wobei der Abstand zwischen den einzelnen Filterrohren (5) eines jeden Filterbündels (7) geringer ist als der Abstand einzelner Filterbündel (7) zueinander sowie mit Mitteln (10, 16), die vorgesehen sind, um die Filterrohre (5) von an deren Außenflächen haftenden Staub- und Produktpartikeln zu reinigen,
**dadurch gekennzeichnet,**
**daß** als Reinigungsmittel im Reinluftraum (4) oberhalb jedes Filterbündels (7) eine Druckluftquelle (10) eines Druckluft-Impuls-Injektors angeordnet ist, um mittels Druckluftstößen die an den Außenflächen der Filterrohre (5) anhaftenden Staub- und Produktpartikel zu entfernen, wobei jedes Filterbündel (7) auf der Oberseite des Trennbodens (2) von einer die Filterrohre (5) des jeweiligen Filterbündels (7) einhüllenden Fangdüse (13) umgeben ist, die die Druckluft des Injektorsystems auf die einzelnen Filterrohre (5) des Filterbündels (7) konzentriert.

2. Staubfilter nach Anspruch 1, **dadurch gekennzeichnet, daß** der Innendurchmesser der Fangdüse (13) etwas größer ist als der Durchmesser der die Filterrohre (5) eines Filterbündels (7) umgebenden Hüllkreises.

3. Staubfilter nach Anspruch 1 oder 2, **dadurch gekennzeichnet, daß** die Druckluftreinigung der Filterrohre (5) zusätzlich über zumindest in einem Bereich des Injektorsystems angesaugte Sekundärluft (15) erfolgt.

4. Staubfilter nach mindestens einem der Ansprüche 1 bis 3, **dadurch gekennzeichnet, daß** als Reinigungsmittel zum Reinigen der Filterrohre (5) im Staubluftraum (3) Waschdüsen (16) zur gerichteten Abgabe von Waschflüssigkeit vorgesehen sind, wobei die Waschdüsen (16) an den Kreuzungspunkten von den Mittelpunkten benachbarter Filterbündel (7) ausgehender Diagonalen angeordnet sind.

5. Staubfilter nach Anspruch 4, **dadurch gekennzeichnet, daß** die Austrittsöffnungen der Waschdüsen (16) bündig mit der Unterseite des Trennbodens (2) abschließen und daß die Waschflüssigkeit im wesentlichen radial so ausgerichtet aus den Waschdüsen (16) austritt, daß die Waschflüssigkeit die einzelnen Gassen zwischen den Filterbündeln (7) sowie zwischen den Filterrohren (5) eines Filterbündels (7) durchströmt sowie auf die Außenflächen der Filterrohre (5) trifft.

6. Staubfilter nach Anspruch 4 oder 5, **dadurch gekennzeichnet, daß** die aus den Waschdüsen (16) austretende Waschflüssigkeit die Innenseite des Filtergehäuses (1) reinigt.

7. Staubfilter nach mindestens einem der Ansprüche 1 bis 6, **dadurch gekennzeichnet, daß** das Filtergehäuse (1) im unteren Bereich der Filterrohre (5) bzw. Filterbündel (7) auf der Außenseite von einem Ringkanal (8) umgeben ist, in den ein Staubluftzufuhrkanal (9) tangential einmündet.

8. Staubfilter nach Anspruch 7, **dadurch gekennzeichnet, daß** im Bereich des Staublufteintritts aus dem Staubluftzufuhrkanal (9) in den Ringkanal (8) und/oder im Ringkanal (8) mindestens eine Waschdüse (16) zur gerichteten Abgabe von Waschflüssigkeit vorgesehen ist.

9. Staubfilter nach mindestens einem der Ansprüche 4 bis 8, **dadurch gekennzeichnet, daß** die Abgabe der Waschflüssigkeit über die Waschdüsen (16) über ein in mehrere Flüssigkeitskreise (17, 18) aufgeteiltes Waschsystem erfolgt.

10. Staubfilter nach Anspruch 9, **dadurch gekennzeichnet, daß** das Waschsystem eine Waschprogrammsteuerung (20) umfaßt.

11. Staubfilter nach mindestens einem der Ansprüche 1 bis 10, **dadurch gekennzeichnet, daß** als Material für die Filterrohre (5) ein eigenstabiler Nadelfilz mit sehr glatter Oberfläche, hoher Luftdurchlässigkeit und einer Wandstärke von kleiner 1 mm, vorzugsweise ca. 0,6 mm, vorgesehen ist.

12. Staubfilter nach mindestens einem der Ansprüche 1 bis 11, **dadurch gekennzeichnet, daß** die einzelnen Filterrohre (5) einen Durchmesser von kleiner 100 mm, vorzugsweise 40 bis 50 mm, aufweisen.

13. Staubfilter nach mindestens einem der Ansprüche 1 bis 12, **dadurch gekennzeichnet, daß** die einzelnen Filterrohre (5) eine Länge von kleiner 4 m, vorzugsweise ca. 2 m, aufweisen.

14. Staubfilter nach mindestens einem der Ansprüche 1 bis 13, **dadurch gekennzeichnet, daß** jeweils sieben Filterrohre (5) ein Filterbündel (7) bilden.

15. Staubfilter nach Anspruch 14, **dadurch gekennzeichnet, daß** der Hüllkreis des Filterbündels (7) weniger als 200 mm, vorzugsweise ca. 170 mm, beträgt.

## Claims

1. Dust filter comprising a vertically oriented filter housing (1), a partition (2) which divides the filter housing (1) into a lower dust-contaminated air chamber (3) and an upper clean air chamber (4), said partition (2) being provided with a large number of openings in which inherently stable filter tubes (5) which are open at the top towards the clean air chamber (4) are suspended, wherein in each case a number of filter tubes (5) are combined to form a filter bundle (7) and wherein the distance between the individual filter tubes (5) of each filter bundle (7) is smaller than the distance between individual filter bundles (7), and also comprising means (10, 16) which are provided for cleaning the filter tubes (5) of dust and product particles adhering to the outer surfaces thereof, **characterized in that**, as cleaning means, a compressed air source (10) of a compressed air pulse injector is arranged in the clean air chamber (4) above each filter bundle (7), in order to remove by compressed air pulses the dust and product particles adhering to the outer surfaces of the filter tubes (5), wherein each filter bundle (7) is surrounded, on the upper side of the partition (2), by a catch nozzle (13) which encloses the filter tubes (5) of the respective filter bundle (7) and concentrates the compressed air of the injector system onto the individual filter tubes (5) of the filter bundle (7).

2. Dust filter according to Claim 1, **characterized in that** the inner diameter of the catch nozzle (13) is somewhat greater than the diameter of the trace circle which surrounds the filter tubes (5) of a filter bundle (7) .

3. Dust filter according to Claim 1 or 2, **characterized in that** the cleaning of the filter tubes (5) by means of compressed air additionally takes place via secondary air (15) taken in at least in one region of the injector system.

4. Dust filter according to at least one of Claims 1 to 3, **characterized in that** washing nozzles (16) for the targeted dispensing of washing liquid are provided as cleaning means for cleaning the filter tubes (5) in the dust-contaminated air chamber (3), wherein the washing nozzles (16) are arranged at the points of intersection of diagonals extending between centre points of neighbouring filter bundles (7).

5. Dust filter according to Claim 4, **characterized in that** the exit openings of the washing nozzles (16) end flush with the underside of the partition (2) and **in that** the washing liquid exits essentially radially from the washing nozzles (16) such that the washing liquid flows through the individual passages between the filter bundles (7) and between the filter tubes (5) of a filter bundle (7) and impacts on the outer surfaces of the filter tubes (5).

6. Dust filter according to Claim 4 or 5, **characterized in that** the washing liquid exiting the washing nozzles (16) cleans the inner side of the filter housing (1).

7. Dust filter according to at least one of Claims 1 to 6, **characterized in that** the filter housing (1) is surrounded on the outer side by an annular channel (8) in the lower region of the filter tubes (5) or filter bundles (7), a dust-contaminated air supply channel (9) opening tangentially into said annular channel.

8. Dust filter according to Claim 7, **characterized in that** at least one washing nozzle (16) for the targeted dispensing of washing liquid is provided in the annular channel (8) and/or in the region where the dust-contaminated air coming from the dust-contaminated air supply channel (9) enters the annular channel (8).

9. Dust filter according to at least one of Claims 4 to 8, **characterized in that** the dispensing of the washing liquid via the washing nozzles (16) takes place via a washing system split into a number of liquid circuits (17, 18).

10. Dust filter according to Claim 9, **characterized in that** the washing system comprises a washing program control.

11. Dust filter according to at least one of Claims 1 to 10, **characterized in that** an inherently stable needled felt having a very smooth surface, high air permeability and a wall thickness of less than 1 mm, preferably approximately 0.6 mm, is provided as material for the filter tubes (5).

12. Dust filter according to at least one of Claims 1 to 11, **characterized in that** the individual filter tubes (5) have a diameter of less than 100 mm, preferably 40 to 50 mm.

13. Dust filter according to at least one of Claims 1 to 12, **characterized in that** the individual filter tubes (5) have a length of less than 4 m, preferably approximately 2 m.

14. Dust filter according to at least one of Claims 1 to 13, **characterized in that** in each case seven filter tubes (5) form a filter bundle (7).

15. Dust filter according to Claim 14, **characterized in that** the trace circle of the filter bundle (7) is less than 200 mm, preferably approximately 170 mm.

## Revendications

1. Filtre à poussière comportant un boîtier de filtre (1) orienté verticalement, un fond de séparation (2) divisant le boîtier de filtre (1) en un compartiment d'air poussiéreux (3) inférieur et un compartiment d'air pur (4) supérieur, lequel fond de séparation est pourvu d'un grand nombre d'orifices dans lequel sont accrochés des tubes de filtrage (5) à stabilité inhérente ouverts vers le haut, vers le compartiment d'air pur (4), plusieurs tubes de filtrage (5) étant réunis en un faisceau de filtrage et la distance entre les différents tubes de filtrage (5) de chaque faisceau de filtrage (7) étant inférieure à l'écartement des différents faisceaux de filtrage (7), et comportant aussi des moyens (10, 16) qui sont prévus pour nettoyer les tubes de filtrage (5) de particules de poussière et de produit adhérant à leurs surfaces extérieures, **caractérisé en ce qu'**une source d'air comprimé (10) d'un injecteur à impulsions d'air comprimé est disposée en tant que moyen de nettoyage dans le compartiment d'air pur (4), au-dessus de chaque faisceau de filtrage (7), afin d'éliminer par des impulsions d'air comprimé les particules de poussière et de produit adhérant aux surfaces extérieures des tubes de filtrage (5), chaque faisceau de filtrage (7) étant entouré, sur la face supérieure du fond de séparation (2), par une buse collectrice (13) enveloppant les tubes de filtrage (5) du faisceau de filtrage (7) respectif, laquelle concentre l'air comprimé du système d'injection sur les différents tubes de filtrage (5) du faisceau de filtrage (7).

2. Filtre à poussière selon la revendication 1, **caractérisé en ce que** le diamètre intérieur de la buse collectrice (13) est légèrement supérieur au diamètre du cercle extérieur entourant les tubes de filtrage (5) d'un faisceau de filtrage (7).

3. Filtre à poussière selon la revendication 1 ou 2, **caractérisé en ce que** le nettoyage à l'air comprimé des tubes de filtrage (5) s'effectue en outre par au moins de l'air secondaire (15) aspiré dans une zone du système d'injection.

4. Filtre à poussière selon l'une au moins des revendications 1 à 3, **caractérisé en ce que** sont prévus comme moyens de nettoyage pour nettoyer les tubes de filtrage (5) dans le compartiment d'air poussiéreux (3), des buses de lavage (16) pour délivrer de façon orientée un liquide de lavage, les buses de lavage (16) étant disposées aux points de croisement de diagonales partant des centres de faisceaux de filtrage (7) voisins.

5. Filtre à poussière selon la revendication 4, **caractérisé en ce que** les orifices de sortie des buses de lavage (16) se terminent au niveau de la face inférieure du fond de séparation (2), et **en ce que** le liquide de lavage sort des buses de lavage (16), orienté sensiblement radialement, de manière que le liquide de lavage circule à travers les différentes voies entre les faisceaux de filtrage (7) ainsi qu'entre les tubes de filtrage (5) d'un faisceau de filtrage (7), et parvienne sur les surfaces extérieures des tubes de filtrage (5).

6. Filtre à poussière selon la revendication 4 ou 5, **caractérisé en ce que** le liquide de lavage, sortant des buses de lavage (16), nettoie la face intérieure du boîtier de filtre (1).

7. Filtre à poussière selon l'une au moins des revendications 1 à 6, **caractérisé en ce que** dans la zone inférieure des tubes de filtrage (5) ou des faisceaux de filtrage (7), le boîtier de filtre (1) est entouré sur son côté extérieur par un canal annulaire (8) dans lequel débouche tangentiellement un canal d'amenée d'air poussiéreux (9).

8. Filtre à poussière selon la revendication 7, **caractérisé en ce qu'**une buse de lavage (16) est prévue, pour délivrer de manière orientée le liquide de lavage, dans la zone de l'entrée d'air poussiéreux entre la sortie du canal d'amenée d'air poussiéreux (9) et le canal annulaire (8), et/ou dans le canal annulaire (8).

9. Filtre à poussière selon l'une au moins des revendications 4 à 8, **caractérisé en ce que** le liquide de lavage est délivré par les buses de lavage (16), par un système de lavage divisé en plusieurs circuits de liquide (17, 18).

10. Filtre à poussière selon la revendication 9, **caractérisé en ce que** le système de lavage comprend une commande de programme de lavage (20).

11. Filtre à poussière selon l'une au moins des revendications 1 à 10, **caractérisé en ce qu'**il est prévu comme matériau pour les tubes de filtrage (5), un feutre aiguilleté à stabilité inhérente avec une surface très lisse, une grande perméabilité à l'air et une épaisseur de paroi inférieure à 1 mm, de préférence d'environ 0,6 mm.

12. Filtre à poussière selon l'une au moins des revendications 1 à 11, **caractérisé en ce que** les différents tubes de filtrage (5) présentent un diamètre inférieur à 100 mm, de préférence de 40 à 50 mm.

13. Filtre à poussière selon l'une au moins des revendications 1 à 12, **caractérisé en ce que** les différents tubes de filtrage (5) présentent une longueur inférieure à 4 m, de préférence d'environ 2 m.

14. Filtre à poussière selon l'une au moins des revendications 1 à 13, **caractérisé en ce que** tous les sept tubes de filtrage (5) forment un faisceau de filtrage (7).

15. Filtre à poussière selon la revendication 14, **caractérisé en ce que** le cercle extérieur du faisceau de filtrage (7) est inférieur à 200 mm, de préférence d'environ 170 mm.
